# EUROPEAN PATENT APPLICATION

(11) **EP 4 804 021 A1**
(43) Date of publication of application: **09.09.2026**
(21) Application number: 25747739.8
(22) Date of filing: 23.01.2025
(51) Int. Cl.: G06F 9/451

(54) **INTERACTION METHOD AND APPARATUS, AND DEVICE AND STORAGE MEDIUM**

(30) Priority: 31.01.2024 CN 202410141425
(71) Applicant: Beijing Zitiao Network Technology Co., Ltd., Beijing 100190 (CN)
(72) Inventor: SONG, Wen, Beijing 100028 (CN); LI, Xin, Beijing 100028 (CN); ZHAO, Jiarui, Beijing 100028 (CN)
(74) Representative: Marks & Clerk LLP
(86) International application number: PCT/CN2025/074192
(87) International publication number: WO 2025/162169

(57) **Abstract**

Embodiments of the disclosure relate to an interaction method, an apparatus, a device, and a storage medium. The method proposed here includes: presenting a playing interface of a target work, the target work including at least an image part, and the image part including a plurality of images; and playing the target work in the playing interface by using a target container, where the target container corresponds to a posting path of the target work, and different posting paths correspond to different containers.

## Description

The present application claims priority to Chinese Patent Application No. 202410141425.8, filed on January 31, 2024, and entitled "Interaction Method, Apparatus, Device, and Storage Medium", which is hereby incorporated herein by reference in its entirety.

### FIELD

Example embodiments of the present disclosure generally relate to the field of computers, and in particular, to an interaction method, an apparatus, a device, and a computer-readable storage medium.

### BACKGROUND

With the development of computer technologies, the Internet has become an important platform for people to exchange information. For example, people may create, share or obtain various types of media works through the Internet.

A multi-image work (also referred to as an atlas work) is an important type of media work, and people may post the multi-image work through different posting paths, for example.

### SUMMARY

In a first aspect of the present disclosure, an interaction method is provided. The method includes: presenting a playing interface of a target work, the target work including at least an image part, and the image part including a plurality of images; and playing the target work in the playing interface by using a target container, where the target container corresponds to a posting path of the target work, and different posting paths correspond to different containers.

In a second aspect of the present disclosure, an interaction apparatus is provided. The apparatus includes: a presenting module configured to present a playing interface of a target work, the target work including at least an image part, and the image part including a plurality of images; and a playing module configured to play the target work in the playing interface by using a target container, where the target container corresponds to a posting path of the target work, and different posting paths correspond to different containers.

In a third aspect of the present disclosure, an electronic device is provided. The device includes at least one processing unit and at least one memory. The at least one memory is coupled to the at least one processing unit, and stores instructions executable by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, the computer program being executable by a processor to implement the method of the first aspect.

It should be understood that content described in this summary section is not intended to identify key or essential features of embodiments of the present disclosure, nor is it intended to limit the scope of the present disclosure. Other features of the present disclosure will become readily comprehensible through the following description.

### BRIEF DESCRIPTION OF THE DRAWINGS

The above and other features, advantages and aspects of the embodiments of the present disclosure will become more apparent from the following detailed description taken in conjunction with the accompanying drawings. In the drawings, the same or similar reference symbols refer to the same or similar elements, where:
FIG. 1 illustrates a schematic diagram of an example environment in which the embodiments according to the present disclosure may be implemented;
FIG. 2A to FIG. 2C illustrate example interfaces according to some embodiments of the present disclosure;
FIG. 3A and FIG. 3B illustrate example interfaces according to some embodiments of the present disclosure;
FIG. 4A to FIG. 4C illustrate example interfaces according to some embodiments of the present disclosure;
FIG. 5 illustrates a flowchart of an example interaction procedure according to some embodiments of the present disclosure;
FIG. 6 illustrates a schematic structural block diagram of an example interaction apparatus according to some embodiments of the present disclosure; and
FIG. 7 illustrates a block diagram of an electronic device capable of implementing multiple embodiments of the present disclosure.

### DETAILED DESCRIPTION

The embodiments of the present disclosure will be described in more detail below with reference to the accompanying drawings. Although certain embodiments of the present disclosure are shown in the drawings, it is to be understood that the present disclosure may be implemented in various forms, and is not to be construed as limited to the embodiments set forth herein. Instead, these embodiments are provided for a more thorough and complete understanding of the present disclosure. It is to be understood that the accompanying drawings and embodiments of the present disclosure are only used for illustrative purposes, and are not used to limit the protection scope of the present disclosure.

It is to be noted that the titles of any section/subsection provided herein are not restrictive. Various embodiments are described throughout this disclosure, and any type of embodiment may be included under any section/subsection. In addition, the embodiments described in any section/subsection may be combined in any manner with any other embodiments described in the same section/subsection and/or different sections/subsections.

In the description of the embodiments of the present disclosure, the term "include" and similar terms should be understood as open-ended inclusions, that is, "include but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition and/or data use, etc. These aspects all follow the corresponding laws, regulations and related provisions. In the embodiments of the present disclosure, collection, acquisition, processing, machining, forwarding, use, and the like for all data are carried out on the premise that the user knows and confirms. Accordingly, when implementing various embodiments of the present disclosure, the user is to be informed of the type, use range, use scenarios, etc., of the data or information that may be involved, and the authorization of the user is to be obtained, through appropriate means according to relevant laws and regulations. The specific manner of informing and/or authorizing may vary according to actual situations and application scenarios, and the scope of the present disclosure is not limited in this regard.

If the solutions in this specification and embodiments involve personal information processing, the processing will be carried out on the premise that there is a legal basis (for example, the consent of the personal information subject is obtained, or it is necessary to perform a contract, etc.), and the processing will only be carried out within the scope of provisions or agreements. If a user refuses to process personal information other than the necessary information required for the basic functions, it will not affect the user's use of the basic functions.

As discussed above, some media platforms may, for example, support users to post multi-image works through different posting paths. Multi-image works (for example, note-type multi-image works, or presentation-type multi-image works) posted through different posting paths usually correspond to different information transmission requirements. However, the traditional way plays such works through a unified playing container, which limits the efficiency of information transmission.

The embodiments of the present disclosure propose an interaction solution. According to this solution, a playing interface of a target work may be presented, where the target work includes at least an image part, and the image part includes a plurality of images. Further, the target work may be played in the playing interface by using a target container, where the target container corresponds to a posting path of the target work, and different posting paths correspond to different containers.

In this way, the embodiments of the present disclosure present multi-image works posted through different posting paths through different containers, so as to match requirements of information transmission under different posting paths, and improve information transmission efficiency.

Various example implementations of this solution are further described in detail below in conjunction with the accompanying drawings.

### Example Environment

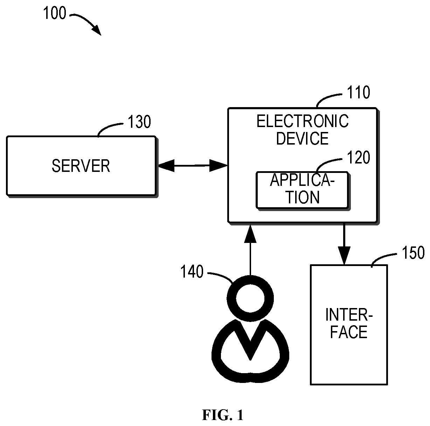

FIG. 1 illustrates a schematic diagram of an example environment 100 in which the embodiments of the present disclosure may be implemented. As shown in FIG. 1, the example environment 100 may include an electronic device 110.

In this example environment 100, the electronic device 110 may run an application 120 supporting interface interaction. The application 120 may be any appropriate type of application for interface interaction, examples of which may include but are not limited to: a video application, a social application, or other appropriate applications. A user 140 may interact with the application 120 via the electronic device 110 and/or its attached devices.

In the environment 100 of FIG. 1, if the application 120 is active, the electronic device 110 may present an interface 150 for supporting interface interaction through the application 120.

In some embodiments, the electronic device 110 communicates with a server 130 to implement the provision of services for the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including accessories and peripherals of these devices or any combination thereof. In some embodiments, the electronic device 110 may also support any type of user-specific interface (such as "wearable" circuitry, etc.).

The server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for the application 120 supporting a virtual scene in the electronic device 110.

A communication connection may be established between the server 130 and the electronic device 110. The communication connection may be established by wired or wireless means. The communication connection may include but not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection therebetween.

It is to be understood that the structure and function of each element in the environment 100 are described for illustrative purposes only, without suggesting any limitation on the scope of the present disclosure.

Some example embodiments of the present disclosure will be described below with continued reference to the accompanying drawings.

### First Example Container

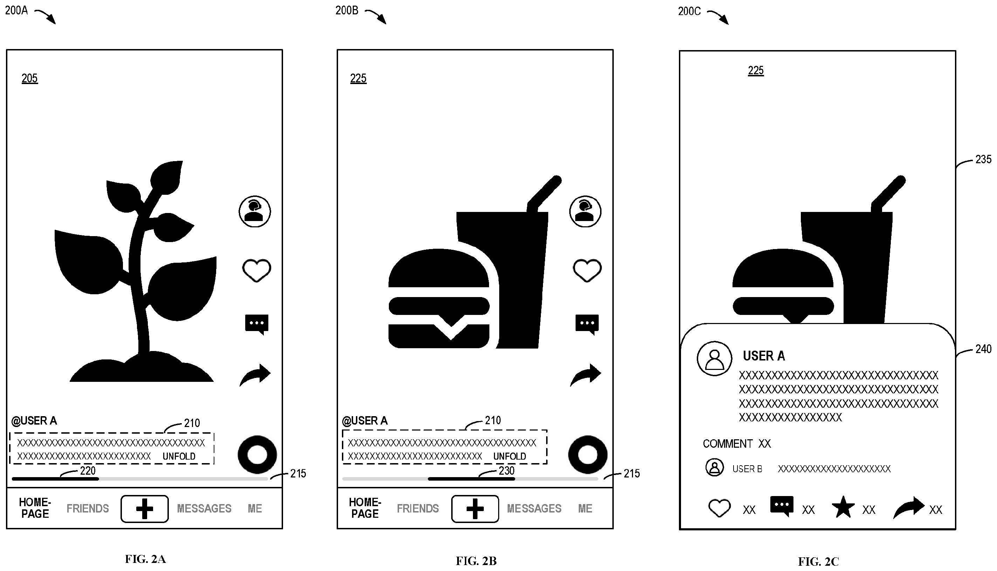

Example interactions according to some embodiments of the present disclosure will be described below in conjunction with FIG. 2A to FIG. 2C. FIG. 2A to FIG. 2C illustrate example interfaces 200A to 200C according to some embodiments of the present disclosure, respectively. The interfaces 200A to 200C may be provided by the electronic device 110 shown in FIG. 1, for example.

As shown in FIG. 2A, the interface 200A may be a viewing interface of a target work. In the interface shown in FIG. 2A, the target work may correspond to, for example, a work posted based on a first posting path.

As an example, a poster of the target work may post the target work through the first posting path (for example, a posting path corresponding to a presentation-type multi-image work) provided by a media platform. In some examples, such a first posting path may expect, for example, that an image part of the target work is more likely to be noticed by a user.

In some embodiments, such a target work may include the image part, which may include a plurality of images. As shown in FIG. 2A, the target work may be composed of three images, the first of which is an image 205. For example, the target work may be a multi-image work, and the multi-image work may be composed of the plurality of images and/or video segments, and different images or video segments may be switched by sliding a picture display area of the multi-image work.

As shown in FIG. 2A, the electronic device 110 may play the target work by using a container corresponding to the first posting path to play the target work. Such a container may indicate a content layout of the target work in the container and/or one or more controls or components included in the container.

In some embodiments, such a target work may further include a text part, which may include, for example, a text content entered by a user. As an example, the container may include an area 210 for displaying at least part of the content of the text part.

Additionally, the container may include a playing control 215 for the target work, and the playing control 215 may be used to present a browsing progress of the plurality of images of the target work.

In some embodiments, the playing control 215 may include a single progress indicator element, such as a progress bar. Additionally, the single progress indicator element includes a plurality of continuous element parts, and a target element part in the single progress indicator element corresponding to a currently browsed target image is distinctively displayed.

Taking FIG. 2A as an example, in a case where the image 205 is currently browsed, a first part 220 corresponding to the image 205 in the progress bar may be distinctively displayed. For example, the first part 220 may have a color, a brightness, a transparency, a display height, etc., which are different from other parts of the progress indicator element.

Further, as shown in FIG. 2B, when an image 225 in the target work is switched to a browsed state, a display style of an element part 230 corresponding to the image 225 in the playing control 215 may be changed.

In some embodiments, the element part 230 may be switched from the display style shown in FIG. 2A to the display style shown in FIG. 2B. In some examples, such style switching does not change the shape of the element part 230, for example, but only changes its display attributes such as a color, a brightness, a transparency, etc.

In some embodiments, when the currently browsed image changes, the area 210 may, for example, keep displaying the same text content.

In some embodiments, the area 210 may also display a text content corresponding to the currently browsed image according to a change of the browsed image. Specifically, the area 210 in FIG. 2A may display a first text content corresponding to the image 205; further, when the container is switched to display the image 225, the electronic device 110 may display, in the area 210, a second text content corresponding to the image 225 in the text part.

In some embodiments, such the first text content and/or the second text content may be determined based on a configuration operation of a user. For example, a poster of the target work may input a corresponding text content for each image. Accordingly, the electronic device 110 may present a text content corresponding to a specific image when the specific image is browsed.

In some embodiments, the first text content and/or the second text content are determined by dividing the text part of the target work. For example, the user may enter multiple paragraphs of text for the target work. The text part may be divided according to a format (for example, a line break) or semantic information of the multiple paragraphs of text, so as to determine a text content corresponding to each image. Further, the electronic device 110 may present a text content corresponding to the specific image when the specific image is browsed.

Continuing to refer to FIG. 2B, the electronic device 110 may further present an interface 200C shown in FIG. 2C based on, for example, a preset operation of the user for the area 210 or the text content displayed in the area 210.

As shown in FIG. 2C, the interface 200C may include an area 235 and an area 240. The area 235 may be used to play the target work, for example, display the image 225 of the target work. The area 240 may be used to display the entire content of the text part of the target work. Additionally, the area 240 may also display interaction information about the target work, such as comment information, collection information, forwarding information, etc.

In some embodiments, a mode in which the electronic device 110 plays the target work in the interface 200C may be determined based on the first posting path. In some embodiments, the mode may indicate a picture filling mode of the area 235.

In some embodiments, the mode may also indicate a layout mode of the area 235 and the area 240, for example. Taking FIG. 2C as an example, the layout mode may be a first layout mode, in which the area 235 and the area 240 overlap.

### Second Example Container

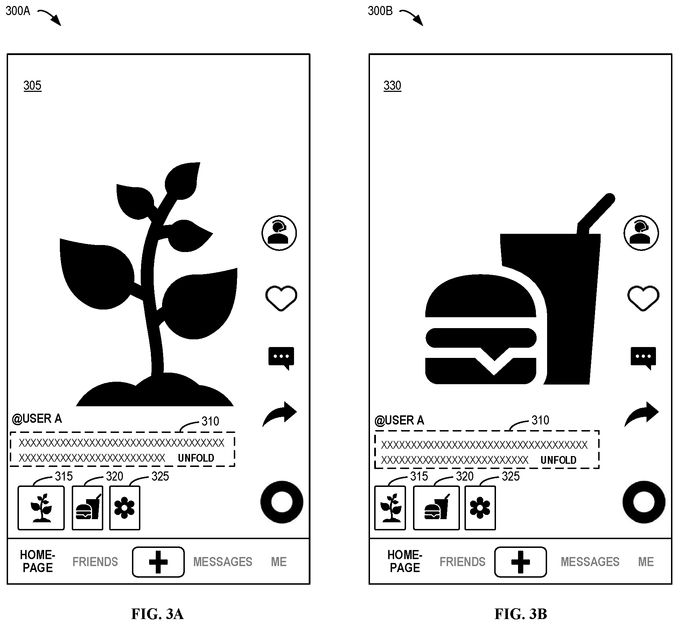

Example interactions according to some embodiments of the present disclosure will be described below in conjunction with FIG. 3A to FIG. 3B. FIG. 3A to FIG. 3B illustrate example interfaces 300A to 300B according to some embodiments of the present disclosure, respectively. The interfaces 300A to 300B may be provided by the electronic device 110 shown in FIG. 1, for example.

As shown in FIG. 3A, the interface 300A may be a viewing interface of a target work. In the interface shown in FIG. 3A, the target work may correspond to, for example, a work posted based on a same or different posting path as the first posting path discussed above.

As an example, a poster of the target work may post the target work through the first posting path (for example, a posting path corresponding to a presentation-type multi-image work) provided by a media platform. In some examples, such a first posting path may expect, for example, that an image part of the target work is more likely to be noticed by a user.

In some embodiments, such a target work may include the image part, which may include a plurality of images. As shown in FIG. 3A, the target work may be composed of three images, the first of which is an image 305.

In some embodiments, the electronic device 110 may use a container corresponding to the first posting path to play the target work. Such a container may indicate a content layout of the target work in the container and/or one or more controls or components included in the container.

In some embodiments, such a target work may further include a text part, which may include, for example, a text content entered by the user. As an example, the container may include an area 310 for displaying at least part of the content of the text part.

Additionally, the container may include a playing control for the target work, and the playing control may be used to present a browsing progress of the plurality of images of the target work. Specifically, as shown in FIG. 3A, the container may include a playing control for indicating the browsing progress of the plurality of images, and the playing control may include a plurality of preview images of the plurality of images, such as a preview image 315, a preview image 320, and a preview image 325. The preview image 315 may correspond to the image 305, for example.

As an example, the electronic device 110 may present the interface 300A in response to a presentation operation for the target work, and display at least one image (for example, the image 305) of the plurality of images and at least part of preview images (for example, the preview image 315, the preview image 320, and the preview image 325) in the interface 300A.

In some embodiments, as shown in FIG. 3A, the preview image 315 corresponding to the currently browsed image 305 may be distinctively displayed. For example, the preview image 315 may have a larger size than the preview image 320 and the preview image 325. Alternatively, the preview image 315 may have, for example, a different color style or a border style.

Further, as shown in FIG. 3B, when the electronic device 110 switches to display an image 330, the electronic device may accordingly adjust display styles of the plurality of preview images to indicate the switching of the images. Specifically, the electronic device 110 may reduce a display size of the preview image 315 and increase a display size of the preview image 320.

Thus, the embodiments of the present disclosure may indicate the browsing status of the plurality of images by displaying the plurality of preview images of the multi-image work in the playing interface, and may indicate the switching of the images by changing the display styles of the preview images.

### Third Example Container

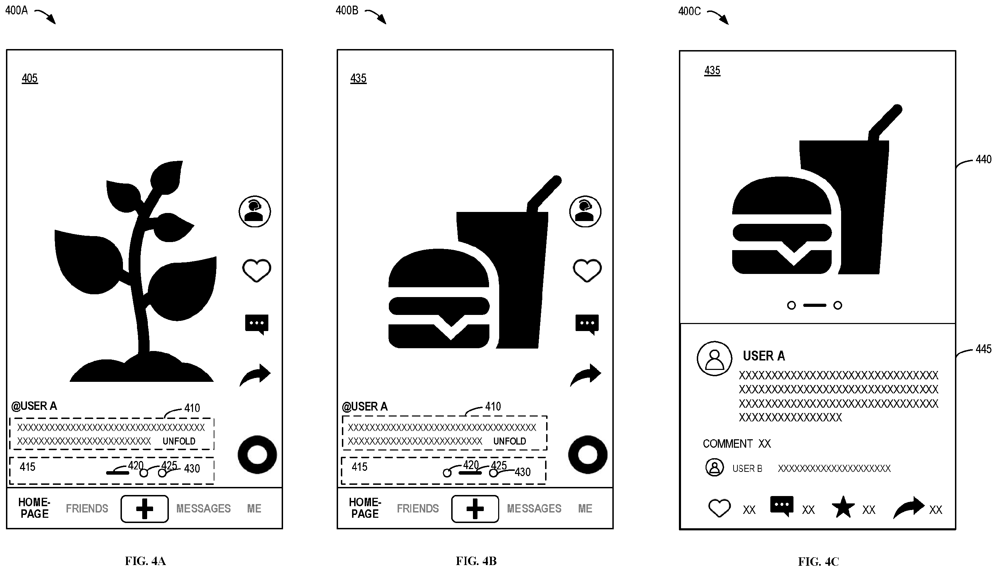

Example interactions according to some embodiments of the present disclosure will be described below in conjunction with FIG. 4A to FIG. 4C. FIG. 4A to FIG. 4C illustrate example interfaces 400A to 400C according to some embodiments of the present disclosure, respectively. The interfaces 400A to 400C may be provided by the electronic device 110 shown in FIG. 1, for example.

As shown in FIG. 4A, the interface 400A may be a viewing interface of a target work. In the interface shown in FIG. 4A, the target work may correspond to, for example, a work posted based on a second posting path.

As an example, a poster of the target work may post the target work through the second posting path (for example, a posting path corresponding to a note-type multi-image work) provided by a media platform. In some examples, such a second posting path may expect, for example, that a text part of the target work can be noticed by a user.

In some embodiments, such a target work may include an image part, which may include a plurality of images. As shown in FIG. 4A, the target work may be composed of three images, the first of which is an image 405.

As shown in FIG. 4A, the electronic device 110 may use a container corresponding to the second posting path to play the target work. Such a container may indicate a content layout of the target work in the container and/or one or more controls or components included in the container.

In some embodiments, such a target work may further include a text part, which may include, for example, a text content entered by a user. As an example, the container may include an area 410 for displaying at least part of the content of the text part.

In some embodiments, different from the area 210 and/or the area 310 introduced above, the area 410 may have a larger maximum display size, for example, thereby allowing more text content to be displayed. Therefore, the container may improve efficiency of information acquisition of the text content.

Additionally, the container may include a playing control 415 for the target work, and the playing control 415 may be used to present a browsing progress of the plurality of images of the target work.

In some embodiments, the playing control 415 may include a plurality of progress indicator elements corresponding to the plurality of images, such as a progress indicator element 420, a progress indicator element 425, and a progress indicator element 430.

As shown in FIG. 4A, the plurality of progress indicator elements may be displayed separately. Additionally, the progress indicator element 420 corresponding to the currently browsed image 405 in the plurality of progress indicator elements may be distinctively displayed. For example, the progress indicator element 420 may have a different element shape from the progress indicator element 425 and the progress indicator element 430.

Further, when switching to display an image 435, the electronic device 110 may display an interface 400B shown in FIG. 4B. Accordingly, a display style of the progress indicator element 425 corresponding to the image 435 in the playing control 415 may be changed.

In some embodiments, the progress indicator element 425 may be switched from the display style shown in FIG. 4A to the display style shown in FIG. 4B. In some examples, different from the example discussed above in conjunction with FIG. 2B, such style switching may change the shape of the progress indicator element 425, for example.

In some embodiments, when a currently browsed image changes, the area 410 may, for example, keep displaying the same text content.

In some embodiments, the area 410 may also display a text content corresponding to the currently browsed image according to a change of the browsed image. Specifically, the area 410 in FIG. 4A may display a first text content corresponding to the image 405; further, when the container is switched to display an image 445, the electronic device 110 may display, in the area 410, a second text content corresponding to the image 445 in the text part.

In some embodiments, such a first text content and/or a second text content may be determined based on a configuration operation of a user. For example, a poster of the target work may input a corresponding text content for each image. Accordingly, the electronic device 110 may present a text content corresponding to a specific image when the specific image is browsed.

In some embodiments, the first text content and/or the second text content are determined by dividing the text part of the target work. For example, a user may enter a plurality of paragraphs of text for the target work. The text part may be divided according to a format (for example, a line break) or semantic information of the a plurality of paragraphs of text, so as to determine a text content corresponding to each image. Further, the electronic device 110 may present a text content corresponding to a specific image when the specific image is browsed.

Continuing to refer to FIG. 4B, the electronic device 110 may further present an interface 400C shown in FIG. 4C based on, for example, a preset operation of the user for the area 410 or the text content displayed in the area 410.

As shown in FIG. 4C, the interface 400C may include an area 440 and an area 445. The area 440 may be used to play the target work, for example, display the image 435 of the target work. The area 445 may be used to display the entire content of the text part of the target work. Additionally, the area 445 may also display interaction information about the target work, such as comment information, collection information, forwarding information, etc.

In some embodiments, a mode in which the electronic device 110 plays the target work in the interface 400C may be determined based on the second posting path. In some embodiments, the mode may indicate a picture filling mode of the area 440. Taking FIG. 4C as an example, different from the mode corresponding to FIG. 2C, the electronic device 110 may display the image 435 in a full area filling mode, for example.

In some embodiments, the mode may also indicate a layout mode of the area 440 and the area 445, for example. Different from the layout mode shown in FIG. 2C, taking FIG. 4C as an example, the layout mode may be a second layout mode, in which the area 435 and the area 440 are independent of each other.

Three different example containers are discussed above in conjunction with FIG. 2A to FIG. 2C, FIG. 3A and FIG. 3B, and FIG. 4A to FIG. 4C, respectively.

In some embodiments, different containers corresponding to different posting paths may also correspond to different content layouts, for example. Specifically, in a case where the target work includes the text part, an arrangement of the image part and the text part of the target work in different containers may be different. For example, some containers may display the image part and the text part in a superposition manner, and some containers may display the image part and the text part separately, for example.

Additionally, different containers corresponding to different posting paths may also correspond to different types of controls, for example. The above three example containers are shown as controls having the same function, but the playing controls are configured to indicate the playing progress according to different styles. In some other examples, different containers may include different numbers of controls, controls with different functions, etc.

By using the corresponding container to present the multi-image work posted by the corresponding posting path, the embodiments of the present disclosure may facilitate the user to perceive the posting path of the multi-image work, and may match requirements of information transmission under different posting paths, and improve information transmission efficiency.

### Example Procedure

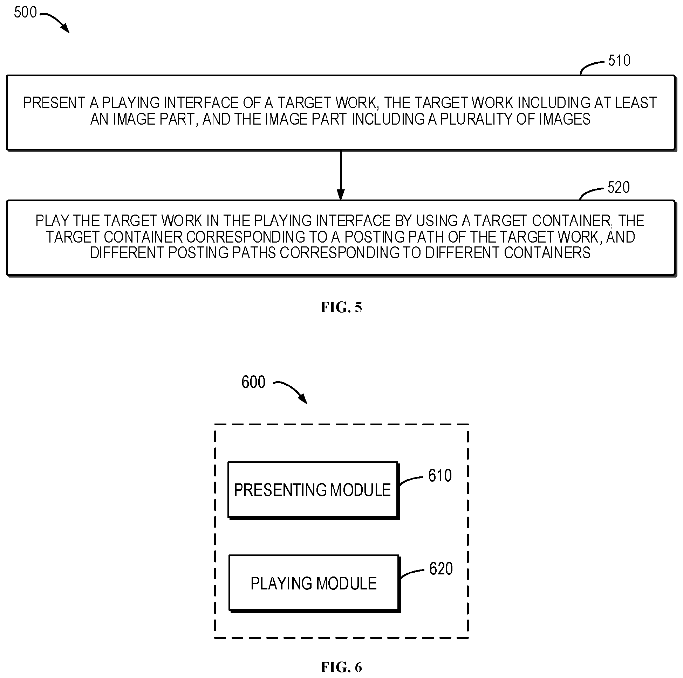

FIG. 5 shows a flowchart of an example interaction procedure 500 according to some embodiments of the present disclosure. The procedure 500 may be implemented at the electronic device 110. The procedure 500 will be described below with reference to FIG. 1.

As shown in the figure, at block 510, the electronic device 110 presents a playing interface of a target work, where the target work includes at least an image part, and the image part includes a plurality of images.

At block 520, the electronic device 110 plays the target work in the playing interface by using a target container , the target container corresponding to a posting path of the target work, and different posting paths corresponding to different containers.

In some embodiments, the different containers indicate that at least one of the following attributes of the containers are different: content layouts of the target work in respective containers; functions of at least one control in the respective containers; and styles of the at least one control in the respective containers.

In some embodiments, the target work further includes a text part, and the content layouts indicate arrangement of the image part and the text part in the respective containers.

In some embodiments, the target container includes a playing control for the target work, where a first playing control of a first work corresponding to a first posting path and a second playing control of a second work corresponding to a second posting path are configured to present a browsing progress of the plurality of images of the target work according to different styles.

In some embodiments, the first playing control includes a plurality of progress indicator elements corresponding to the plurality of images, the plurality of progress indicator elements are displayed separately, and a target progress indicator element corresponding to a currently browsed target image in the plurality of progress indicator elements is distinctively displayed; and the second playing control includes a single progress indicator element, the single progress indicator element includes a plurality of continuous element parts, and a target element part corresponding to the currently browsed target image in the single progress indicator element is distinctively displayed.

In some embodiments, in response to a first image of the first work being switched to a browsing status, a progress indicator element corresponding to the first image in the first playing control is switched from a first style to a second style, the first style and the second style corresponding to different element shapes; and in response to a second image of the second work being switched to a browsing status, an element part corresponding to the second image in the second playing control is switched from a third style to a different fourth style, the third style and the fourth style corresponding to a same shape.

In some embodiments, the first playing control and/or the second playing control are further configured to display a plurality of preview images of the plurality of images displayed in the playing interface.

In some embodiments, the procedure 500 further includes: in response to a presentation operation for the target work, displaying at least one image of the plurality of images and at least part of preview images of the plurality of preview images in the playing interface of the target work.

In some embodiments, in response to a third image being switched to the browsing status, a target preview image corresponding to the third image in the plurality of preview images is switched from a fifth style to a different sixth style.

In some embodiments, the fifth style and the sixth style correspond to different display sizes.

In some embodiments, the target work further includes a text part, the target container includes a text component for displaying at least part of content of the text part, and text components in different containers corresponding to different posting paths have different maximum display sizes.

In some embodiments, the procedure 500 further includes: presenting, based on a preset operation for a text playing area, a first area for playing the target work and a second area for displaying the entire content of the text part in the playing interface, where in response to the target work being posted based on a first posting path, the target work is played in the first area in a first mode; and in response to the target work being posted based on a second posting path, the target work is played in the first area in a second mode, the first mode being different from the second mode.

In some embodiments, the first mode and the second mode correspond to different picture filling modes of the first area.

In some embodiments, the first mode and the second mode correspond to different layout modes of the first area and the second area, the layout modes including: a first layout mode indicating that the first area and the second area overlap; and a second layout mode indicating that the first area and the second area are independent of each other.

In some embodiments, the target work further includes a text part, and the procedure 500 further includes: displaying at least part of content of the text part in the playing interface.

In some embodiments, the at least part of content includes a first text content corresponding to a currently browsed first image in the plurality of images, and the procedure 500 further includes: in response to the playing interface being switched to display a second image in the plurality of images, displaying, in the playing interface, a second text content corresponding to the second image in the text part.

In some embodiments, the first text content and/or the second text content are determined based on a configuration operation of a user; or the first text content and/or the second text content are determined by dividing the text part.

### Example Apparatus and Device

The embodiments of the present disclosure further provide a corresponding apparatus for implementing the above method or procedure. FIG. 6 illustrates a schematic structural block diagram of an example interaction apparatus 600 according to some embodiments of the present disclosure. The apparatus 600 may be implemented as or included in the electronic device 110. Each module/component in the apparatus 600 may be implemented by hardware, software, firmware, or any combination thereof.

As shown in FIG. 6, the apparatus 600 includes a presenting module 610 configured to present a playing interface of a target work, the target work including at least an image part, and the image part including a plurality of images; and a playing module 620 configured to play the target work in the playing interface by using a target container, the target container corresponding to a posting path of the target work, and different posting paths corresponding to different containers.

In some embodiments, the different containers indicate that at least one of the following attributes of the containers are different: content layouts of the target work in respective containers; functions of at least one control in the respective containers; and styles of the at least one control in the respective containers.

In some embodiments, the target work further includes a text part, and the content layouts indicate arrangement of the image part and the text part in the respective containers.

In some embodiments, the target container includes a playing control for the target work, where a first playing control of a first work corresponding to a first posting path and a second playing control of a second work corresponding to a second posting path are configured to present a browsing progress of the plurality of images of the target work according to different styles.

In some embodiments, the first playing control includes a plurality of progress indicator elements corresponding to the plurality of images, the plurality of progress indicator elements are displayed separately, and a target progress indicator element corresponding to a currently browsed target image in the plurality of progress indicator elements is distinctively displayed; and the second playing control includes a single progress indicator element, the single progress indicator element includes a plurality of continuous element parts, and a target element part corresponding to the currently browsed target image in the single progress indicator element is distinctively displayed.

In some embodiments, in response to a first image of the first work being switched to a browsing status, a progress indicator element corresponding to the first image in the first playing control is switched from a first style to a second style, the first style and the second style corresponding to different element shapes; and in response to a second image of the second work being switched to a browsing status, an element part corresponding to the second image in the second playing control is switched from a third style to a different fourth style, the third style and the fourth style corresponding to a same shape.

In some embodiments, the first playing control and/or the second playing control are further configured to display a plurality of preview images of the plurality of images displayed in the playing interface.

In some embodiments, the apparatus 600 further includes a previewing module configured to: in response to a presentation operation for the target work, display at least one image of the plurality of images and at least part of preview images of the plurality of preview images in the playing interface of the target work.

In some embodiments, in response to a third image being switched to a browsing status, a target preview image corresponding to the third image in the plurality of preview images is switched from a fifth style to a different sixth style.

In some embodiments, the fifth style and the sixth style correspond to different display sizes.

In some embodiments, the target work further includes a text part, the target container includes a text component for displaying at least part of content of the text part, and text components in different containers corresponding to different posting paths have different maximum display sizes.

In some embodiments, the apparatus 600 further includes a viewing module configured to: present, based on a preset operation for a text playing area, a first area for playing the target work and a second area for displaying the entire content of the text part in the playing interface , where in response to the target work being posted based on a first posting path, the target work is played in the first area in a first mode; and in response to the target work being posted based on a second posting path, the target work is played in the first area in a second mode, the first mode being different from the second mode.

In some embodiments, the first mode and the second mode correspond to different picture filling modes of the first area.

In some embodiments, the first mode and the second mode correspond to different layout modes of the first area and the second area, the layout modes including: a first layout mode indicating that the first area and the second area overlap; and a second layout mode indicating that the first area and the second area are independent of each other.

In some embodiments, the target work further includes a text part, and the apparatus 600 further includes a text displaying module configured to display at least part of content of the text part in the playing interface.

In some embodiments, the at least part of content includes a first text content corresponding to a currently browsed first image in the plurality of images, and the text displaying module is further configured to: in response to the playing interface being switched to display a second image in the plurality of images, display, in the playing interface, a second text content corresponding to the second image in the text part.

In some embodiments, the first text content and/or the second text content are determined based on a configuration operation of a user; or the first text content and/or the second text content are determined by dividing the text part.

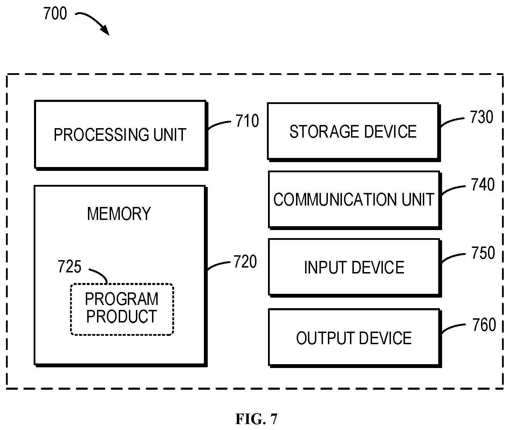

FIG. 7 illustrates a block diagram of an electronic device 700 in which one or more embodiments of the present disclosure may be implemented. It is to be understood that the electronic device 700 shown in FIG. 7 is only illustrative, and should not constitute any limitation on the functionality and scope of the embodiments described herein. The electronic device 700 shown in FIG. 7 may be used to implement the electronic device 110 in FIG. 1.

As shown in FIG. 7, the electronic device 700 is in the form of a general-purpose electronic device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor, and may execute various processing based on a program stored in the memory 720. In a multiprocessor system, multiple processing units execute computer executable instructions in parallel to improve the parallel processing capability of the electronic device 700.

The electronic device 700 generally includes multiple computer storage medium. Such medium may be any available medium accessible to the electronic device 700, including, but not limited to, volatile and non-volatile medium, removable and non-removable medium. The memory 720 may be volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 730 may be any removable or non-removable medium, and may include a machine-readable medium such as a flash drive, a magnetic disk, or any other medium, which may be used to store information and/or data and may be accessed within the electronic device 700.

The electronic device 700 may further include additional removable/non-removable, volatile/non-volatile storage medium. Although not shown in FIG. 7, a disk driver for reading from or writing to a removable, non-volatile disk (such as a "floppy disk"), and an optical disk driver for reading from or writing to a removable, non-volatile optical disk may be provided. In these cases, each driver may be connected to a bus (not shown) by one or more data medium interfaces. The memory 720 may include a computer program product 725, which has one or more program modules configured to perform various methods or actions of various embodiments of the present disclosure.

The communication unit 740 implements communication with other electronic devices through a communication medium. In addition, the functions of the components of the electronic device 700 may be implemented by a single computing cluster or multiple computing machines, which may communicate through a communication connection. Therefore, the electronic device 700 may use a logical connection with one or more other servers, a network personal computer (PC) or another network node to operate in a networked environment.

The input device 750 may be one or more input devices, such as a mouse, a keyboard, a tracking ball, etc. The output device 760 may be one or more output devices, such as a display, a speaker, a printer, etc. The electronic device 700 may further communicate with one or more external devices (not shown) through the communication unit 740 as needed, the external devices such as a storage device, a display device, etc., communicate with one or more devices that enable a user to interact with the electronic device 700, or communicate with any device (such as a network card, a modem, etc.) that enables the electronic device 700 to communicate with one or more other electronic devices. Such communication may be performed via input/output (I/O) interfaces (not shown).

According to an example implementation of the present disclosure, a computer-readable storage medium is provided, which has computer executable instructions stored thereon, and the computer executable instructions are executed by a processor to implement the method described above. According to an example implementation of the present disclosure, there is further provided a computer program product, which is tangibly stored on a non-transitory computer-readable medium and includes computer executable instructions, and the computer executable instructions are executed by a processor to implement the method described above.

Various aspects of the present disclosure are described herein with reference to flowcharts and/or block diagrams of methods, apparatuses, devices and computer program products implemented according to the present disclosure. It is to be understood that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, create means for implementing the functions/acts specified in one or more blocks of the flowcharts and/or block diagrams. These computer-readable program instructions may also be stored in a computer-readable storage medium, and these instructions cause a computer, a programmable data processing apparatus, and/or other devices to work in a specific manner, such that the computer-readable medium storing the instructions includes a manufactured product, which includes instructions for implementing various aspects of the functions/acts specified in one or more blocks of the flowcharts and/or block diagrams.

The computer-readable program instructions may be loaded onto a computer, another programmable data processing apparatus, or other devices, so that a series of operation steps are performed on the computer, the other programmable data processing apparatus, or the other devices to generate a computer-implemented process, such that the instructions executed on the computer, the other programmable data processing apparatus, or the other devices implement the functions/acts specified in one or more blocks of the flowcharts and/or block diagrams.

The flowcharts and block diagrams in the drawings show the possibly implemented architectures, functions and operations of the system, method and computer program product according to multiple implementations of the present disclosure. In this regard, each block in the flowchart or block diagram may represent a module, a program segment, or a part of an instructions, and the module, the program segment, or the part of an instructions contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It is to also be noted that each block in the block diagram and/or flowcharts, and the combinations of blocks in the block diagrams and/or flowchart may be implemented by a dedicated hardware-based system that performs the specified functions or actions, or may be implemented by a combination of dedicated hardware and computer instructions.

Various implementations of the present disclosure have been described above, and the above description are illustrative, not exhaustive, and are not limited to the disclosed implementations. Without departing from the scope and spirit of the illustrated implementations, many modifications and variations will be apparent to those of ordinary skill in the technical field. The selection of terms used herein is intended to best explain the principles of the implementations, practical applications, or improvements to the technologies in the market, or to enable other ordinary technical personnel in the technical field to understand the various implementations disclosed herein.

## Claims

1. An interaction method, comprising:
presenting a playing interface of a target work, the target work comprising at least an image part, the image part comprising a plurality of images; and
playing the target work in the playing interface by using a target container, wherein the target container corresponds to a posting path of the target work, and different posting paths correspond to different containers.

2. The method of claim 1, wherein the different containers indicate that at least one of the following attributes of the containers are different:
content layouts of the target work in respective containers;
functions of at least one control in the respective containers; and
styles of the at least one control in the respective containers.

3. The method of claim 2, wherein the target work further comprises a text part, and the content layouts indicate arrangement of the image part and the text part in the respective containers.

4. The method of claim 1, wherein the target container comprises a playing control for the target work, wherein a first playing control of a first work corresponding to a first posting path and a second playing control of a second work corresponding to a second posting path are configured to present a browsing progress of the plurality of images of the target work according to different styles.

5. The method of claim 4, wherein:
the first playing control comprises a plurality of progress indicator elements corresponding to the plurality of images, the plurality of progress indicator elements are displayed separately, and a target progress indicator element corresponding to a currently browsed target image in the plurality of progress indicator elements is distinctively displayed; and
the second playing control comprises a single progress indicator element, the single progress indicator element comprises a plurality of continuous element parts, and a target element part corresponding to the currently browsed target image in the single progress indicator element is distinctively displayed.

6. The method of claim 5, wherein:
in response to a first image of the first work being switched to a browsing status, a progress indicator element corresponding to the first image in the first playing control is switched from a first style to a second style, the first style and the second style corresponding to different element shapes; and
in response to a second image of the second work being switched to a browsing status, an element part corresponding to the second image in the second playing control is switched from a third style to a different fourth style, the third style and the fourth style corresponding to a same shape.

7. The method of claim 4, wherein the first playing control and/or the second playing control are further configured to display a plurality of preview images of the plurality of images displayed in the playing interface.

8. The method of claim 7, further comprising:
in response to a presentation operation for the target work, displaying at least one image of the plurality of images and at least part of preview images of the plurality of preview images in the playing interface of the target work.

9. The method of claim 7, wherein:
in response to a third image being switched to a browsing status, a target preview image corresponding to the third image in the plurality of preview images is switched from a fifth style to a different sixth style.

10. The method of claim 9, wherein the fifth style and the sixth style correspond to different display sizes.

11. The method of claim 1, wherein the target work further comprises a text part, the target container comprises a text component for displaying at least part of content of the text part, and the text component in different containers corresponding to different posting paths have different maximum display sizes.

12. The method of claim 11, further comprising:
presenting, based on a preset operation for a text playing area, a first area for playing the target work and a second area for displaying the entire content of the text part in the playing interface,
wherein in response to the target work being posted based on a first posting path, the target work is played in the first area in a first mode; and in response to the target work being posted based on a second posting path, the target work is played in the first area in a second mode, the first mode being different from the second mode.

13. The method of claim 12, wherein the first mode and the second mode correspond to different picture filling modes of the first area.

14. The method of claim 12, wherein the first mode and the second mode correspond to different layout modes of the first area and the second area, the layout modes comprising:
a first layout mode indicating that the first area and the second area overlap; and
a second layout mode indicating that the first area and the second area are independent of each other.

15. The method of claim 1, wherein the target work further comprises a text part, and the method further comprises:
displaying at least part of content of the text part in the playing interface.

16. The method of claim 15, wherein the at least part of content comprises a first text content corresponding to a currently browsed first image in the plurality of images, and the method further comprises:
in response to the playing interface being switched to display a second image in the plurality of images, displaying, in the playing interface, a second text content corresponding to the second image in the text part.

17. The method of claim 16, wherein:
the first text content and/or the second text content are determined based on a configuration operation of a user; or
the first text content and/or the second text content are determined by dividing the text part.

18. An interaction apparatus, comprising:
a presenting module configured to present a playing interface of a target work, the target work comprising at least an image part, the image part comprising a plurality of images; and
a playing module configured to play the target work in the playing interface by using a target container, wherein the target container corresponds to a posting path of the target work, and different posting paths correspond to different containers.

19. An electronic device, comprising:
at least one processing unit; and
at least one memory, the at least one memory being coupled to the at least one processing unit and storing instructions executable by the at least one processing unit, the instructions, when executed by the at least one processing unit, causing the electronic device to perform the method of any of claims 1 to 17.

20. A computer-readable storage medium having a computer program stored thereon, the computer program being executable by a processor to implement the method of any of claims 1 to 17.
